(19) Europäisches Patentamt
European Patent Office
Office européen des brevets

(11) Numéro de publication : **0 577 507 A1**

(12) # DEMANDE DE BREVET EUROPEEN

(21) Numéro de dépôt : **93401686.6**

(22) Date de dépôt : **30.06.93**

(51) Int. Cl.$^5$ : **C09K 3/30,** B65D 83/14, B05B 11/02

(30) Priorité : **30.06.92 FR 9208043**

(43) Date de publication de la demande : **05.01.94 Bulletin 94/01**

(84) Etats contractants désignés : **BE CH DE ES FR GB IE IT LI LU NL PT**

(71) Demandeur : **NLN**
**Z.I.La Vigne-aux-Loups 18, Avenue Arago, B.P.28**
**F-91382 Chilly-Mazarin (FR)**

(72) Inventeur : **Bou, Alain Henri**
**6 Route des Chaumes**
**F-86340 Les Roches Premarie (FR)**
Inventeur : **Goffinet, Pierre Charles Emile**
**22 Allée des Petites Garennes**
**F-91190 Gif Sur Yvette (FR)**
Inventeur : **Le Nigen, Norbert Claude**
**14 rue des Saussaies**
**F-75008 Paris (FR)**

(74) Mandataire : **Le Roux, Martine et al**
**Cabinet Beau de Loménie 158, rue de l'Université**
**F-75340 Paris Cédex 07 (FR)**

(54) **Compositions liquides propulsées en récipient sous pression de gaz comprimé pour une pulvérisation non-inflammable et à faibles retombées.**

(57) L'invention concerne une composition liquide propulsée en récipient sous pression de gaz comprimé pour une pulvérisation ininflammable et à faibles retombées, caractérisée en ce qu'elle comprend, en pourcentages pondéraux :

a) de 45% à 94,999% d'eau
b) de 5% à 45% d'au moins un composé de formule (I)

$$R - A - (CH_2)_x - (O)_y - R' \qquad (I)$$

dans laquelle

— R représente un groupe méthyle , éthyle ou isopropyle,
— R'représente l'hydrogène ou un groupe méthyle, éthyle ou isopropyle,
— ou bien R et R' représentent ensemble un groupement $-CH_2-CH_2-$ dans la formule (I) ci-dessus cyclisée,
— x = 0,1 ou 2
— Y = 0 ou 1
— A est -O-,

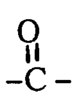 ou 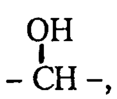,

ledit composé ayant un point d'ébullition compris entre environ 25°C et 200°C à la pression atmosphérique, et

c) de 0,001% à 50% d'une matière active.

Cette composition peut être notamment utilisée pour un agent nettoyant de surface, un désodorisant d'atmosphère, un déodorant corporel, un produit capillaire ou un agent insecticide.

EP 0 577 507 A1

L'invention concerne des compositions liquides ininflammables et à faibles retombées, propulsées en récipient sous pression de gaz comprimé.

Les récipients sous pression de gaz comprimé utilisables dans le cadre de l'invention peuvent être soit des générateurs d'aérosols, par exemple métalliques, étanches et mis industriellement sous pression d'un gaz non liquéfié, soit des récipients dont la mise en pression est effectuée régulièrement par l'utilisateur à l'aide d'un système de pompe manuelle à piston, par exemple les systèmes AIR-SPRAY ® commercialisés par la Société du même nom, ou même de pulvérisateurs dont la réserve est compressible par déformation ou "squeeze bottles".

Dans la plupart des cas, ces systèmes génèrent l'ouverture d'une valve par pression sur un bouton poussoir, permettant une pulvérisation fine et continue de la composition. De la finesse de cette pulvérisation dépend essentiellement l'importance des retombées de liquide et le caractère plus ou moins mouillant de la nébulisation.

Dans l'art antérieur, les générateurs d' aérosols communément utilisés sont soit des aérosols à gaz liquéfié, soit des aérosols à gaz comprimé ou partiellement dissout.

Les aérosols à gaz liquéfié comprennent un mélange intime d'une composition à propulser et d'un gaz propulseur sous forme liquide. La pression est essentiellement déterminée par la pression de vapeur saturante du gaz propulseur liquéfié et est donc sensiblement constante tout au long de la durée de l'aérosol. En sortie de valve, le gaz liquéfié se détend brutalement en passant à l'état gazeux et atomise les particules liquides en leur conférant une taille faible évitant les retombées (le diamètre des particules est d'environ 10 à 40 μm).

Les gaz habituellement utilisés dans ce type d'aérosols sont notamment des hydrocarbures chlorofluorés (CFC), des mélanges d'alcanes à chaînes courtes (par exemple n-butane, isobutane ou propane) ou du diméthyléther (DME).

Des compositions liquides pour aérosols contenant du DME en tant qu'agent propulseur sont notamment décrites dans les brevets FR 2 028 224 2 441 653.Le brevet FR 2 460 859 décrit un générateur d' aérosol permettant la pulvérisation de cette dernière.

Néanmoins, ce type d'agent propulseur présente de nombreux inconvénients, notamment sur le plan écologique.

En effet, la dégradation des CFC dans la haute atmosphère sous l'action de rayons ultraviolets génère du chlore et contribue à la diminution de la couche d'ozone, rendant l' utilisation de ces composés indésirable.

Par ailleurs, les alcanes inférieurs et le DME, classiquement utilisés comme substituts des CFC, sont sans effet sur la couche d'ozone mais participent au phénomène connu sous le nom d'"effet de serre" dû à la quantité importante de composés organiques volatils présents dans l'atmosphère qui contribuent à freiner la réémission du rayonnement infra-rouge, conduisant ainsi à une augmentation de la température moyenne de surface. Ce phénomène peut avoir des conséquences néfastes sur le plan climatologique et écologique.

Par ailleurs, les alcanes inférieurs et le DME, très inflammables, sont susceptibles d'entraîner des risques pour l'utilisateur dans des conditions inhabituelles d'utilisation, et impliquent au niveau de la production la mise en place d'installations coûteuses afin d' en assurer la sécurité.

Les aérosols à gaz comprimés, notamment à l'air ou à l'azote, actuellement utilisés présentent l'inconvénient d'entraîner des retombées importantes des compositions liquides pulvérisées.

En effet, la pulvérisation obtenue par un effet de compression (mécanique, pneumatique etc...) qui force le liquide à travers la valve du générateur d'aérosol confère aux particules obtenues un diamètre souvent supérieur ou égal à 100 μm, et par là même génère des retombées et/ou confère un caractère mouillant à la pulvérisation particulièrement indésirables dans le cas de produits destinés à être pulvérisés dans l'atmosphère (désodorisants d'atmosphère, insecticides etc...) ou sur la peau (déodorants corporels, sprays coiffants etc...).

On a maintenant trouvé de nouvelles compositions liquides présentant les avantages d'être à la pulvérisation à la fois inexplosibles, ininflammables dans les conditions d'emploi, à faibles retombées, et propulsées en récipient sous pression d'un gaz comprimé, lequel est sans effet indésirable sur le plan écologique.

Ces compositions permettent notamment, pour un même système de pulvérisation, de diminuer sensiblement le diamètre moyen des particules pulvérisées.

L'invention concerne donc des compositions liquides propulsées en récipient sous pression de gaz comprimé comprenant, en pourcentages pondéraux:

a) de 45% à 94,999 % d'eau

b) de 5% à 45% d'au moins un composé de formule (I)

$$R\text{-}A\text{-}(CH_2)_x\text{-}(O)_y\text{-}R' \qquad (I)$$

dans laquelle

- R représente un groupe méthyle, éthyle ou isopropyle ;
- R'représente l'hydrogène ou un groupe méthyle, éthyle ou isopropyle,
- ou bien R et R' ensemble représentent un groupement $-CH_2\text{-}CH_2-$ dans la formule (I) ci-dessus cyclisée,

- x = 0,1 ou 2
- y = 0 ou 1
- A est -O-,

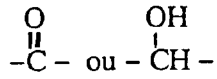

ledit composé ayant un point d'ébullition compris entre environ 25°C et 200°C à la pression atmosphérique, et

c) de 0,001% à 50% d'une matière active.

Par matière active, on entend aussi bien des matières participant directement à l'activité du produit (par exemple les résines pour les laques capillaires, les composés à activité insecticide pour les insecticides) que les composés auxiliaires comme par exemple les émulsifiants, les synergisants, les agents hydratants, les agents conférant des bénéfices secondaires, ainsi que les solvants autres que ceux énumérés ci-dessus au point b), en particulier des solvants du type de l'éthanol, l'isopropanol, le méthanol ou le propylèneglycol.

Avantageusement, le composé de formule (I) ci-dessus est un composé dans lequel A représente l'oxygène, R, R', x et y étant tels que définis ci-dessus.

Des composés préférés de ce type sont notamment le méthylal (diméthoxyméthane), le dioxolanne, l'éthylèneglycol diméthyl éther (1,2-diméthoxyéthane), l'éther isopropylique (di-isopropyl éther), l'éther éthylique(diéthyl éther).

Des composés particulièrement avantageux sont le méthylal et l'éthylèneglycol diméthyl éther.

D'autres composés de formule (I) avantageux sont ceux dans lesquels A représente

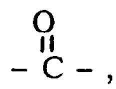

R, R', x et y étant tels que définis ci-dessus. De tels composés peuvent notamment être choisis parmi l'acétone, la méthyléthylcétone, la diisopropylcétone et la diéthylcétone.

D'autres composés de formule (I) avantageux sont ceux dans lesquels A représente

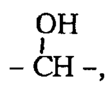

R, R', x et y étant tels que définis plus haut . Parmi ceux-ci, on peut notamment citer le propylèneglycol monométhyl éther (1-méthoxypropan-2-ol).

Les points d'ébullition des composés mentionnés ci-dessus à la pression atmosphérique sont donnés dans le tableau 1 ci-après :

TABLEAU 1

| COMPOSE | Point d'ébullition °C |
|---|---|
| ETHERS | |
| Méthylal | 42,3 |
| Dioxolanne | 74,0 |
| Ethylèneglycol diméthyléther (GDME ou glyme) | 85,2 |
| Ether isopropylique | 67,5 |
| Ether éthylique | 34,5 |
| Propylèneglycol monométhyléther | 120,1 |
| CETONES | |
| Acétone | 56,2 |
| Méthyléthylcétone | 79,6 |
| Diisopropyl cétone | 123,7 |
| Diéthyl cétone | 101,0 |

Les composés répondant à la formule (I) mais dont le point d'ébullition est inférieur à environ 25°C à la pression atmosphérique, tel que notamment le diméthyléther, sont explicitement exclus des compositions selon l'invention.

Dans un aspect préféré, les compositions selon l'invention comprennent en outre de 0 à 50% en poids d'un alcool aliphatique de formule R"- 0H dans laquelle R" est un groupe alkyle linéaire ou ramifié ayant de 1 à 5 atomes de carbone, un groupe alkyle linéaire ayant de 2 à 4 atomes de carbone étant particulièrement préféré.

Les compositions selon l'invention peuvent optionnellement contenir un ou plusieurs co-solvants.

Avantageusement, on utilisera un co-solvant de type éther lourd et représenté par la formule :

$$R_1(O\text{-}CH_2\text{-}CH_2)_m\text{-}O\text{-}R_2$$

dans laquelle

- $R_1$ et $R_2$, identiques ou différents, représentent un groupe alkyle linéaire ou ramifié ayant de 1 à 6 atomes de carbone, ou un groupe phényle ;
- m = 1 à 4.

Dans un autre aspect avantageux, le co-solvant pourra être de type acétate et représenté par la formule :

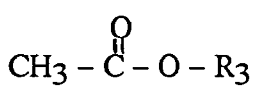

dans laquelle $R_3$ est un groupe alkyle en $C_1$ - $C_6$ linéaire ou ramifié, ou un groupe phényle, ou un groupe -$(CH_2)_n$-O-$R_4$ dans lequel $R_4$ est un groupe méthyl ou éthyl et n = 1 ou 2.

Lesdites compositions peuvent également contenir des mélanges de ces 2 types de co-solvants.

Des compositions avantageuses selon l'invention comprennent, en pourcentages pondéraux :

a) de 50 % à 65% d'eau,

b) de 15% à 25% d'au moins un composé de formule (I) tel que défini plus haut, et

c) de 20% à 35% d'une matière active.

Les compositions selon l'invention peuvent être destinées à des applications variées, sous la forme de pulvérisations utilisables notamment en tant que désodorisants d'atmosphère, déodorants corporels, laques et produits capillaires, insecticides, agents nettoyants de surface (produits d'entretien des meubles, produits nettoyants pour vitres et usages divers), produits d'aide au repassage ou produits pré-détachants.

Suivant l'application visée, les compositions selon l'invention comporteront les matières actives et les additifs appropriés.

Les matières actives habituellement utilisés dans chacune des applications mentionnées ci-dessus sont

énumérés ci-après de manière non limitative :

a) désodorisants d'atmosphère

On trouve traditionnellement dans ce type de produits des parfums dans des proportions pondérales de l'ordre de 0,1% à 3%.

b) déodorants corporels

Ces produits comprennent notamment :
- des parfums : 0,1% à 10%
- des agents bactéricides : 0,01% à 0,5%, par exemple l'Irgasan DP300® (Ciba Geigy)
- des agents antiperspirants : 5% à 40%, par exemple des sels d'aluminium de type chlorhydrate d'aluminium.

c) laques et produits capillaires

On trouve habituellement dans ce type de produits :
- des émulsifiants : 0 à 5% par exemple des alcools gras éthoxylés, plus particulièrement de l'huile de ricin éthoxylée
- des résines coiffantes : 0,1% à 20% notamment les polyvinylpyrrolidones (PVP), les copolymères vinylacétate-PVP, polyacrylate-PVP,
- des agents hydratants : 0 à 20% , par exemple le propylène glycol, la glycérine ou le sorbitol
- des filtres UV : de l'ordre de 0,5%, par exemple l'oxybenzone,
- des vitamines

d) insecticides pour insectes volants ou rampants

Ces produits contiennent habituellement :
- des solvants hydrocarbures : 5% à 25%, notamment le White Spirit ou le xylène,
- des agents insecticides : 0,02 à 2% , par exemple des pyréthrénoïdes du type cyperméthrine, perméthrine, alléthrine, phénothrine ou tétraméthrine,
- des agents potentialisateurs de l'activité insecticide : 0,5% à 5%, par exemple le pipéronylbutoxyde (PBO),
- des parfums : 0 à 2%,
- des émulsifiants : 0,2% à 5%.

e) produits d'entretien des meubles

On trouve notamment dans ces produits :
- des agents nettoyants, dépoussiérants et/ou antistatiques : 0,1% à 5%, notamment des agents tensioactifs de type alcool gras éthoxylés,
- des cires : 1% à 20%, par exemple des émulsions de cires microcristallines,
- des silicones : 0 à 10%, notamment des émulsions de polydiméthylsiloxane,
- des émulsifiants : 0 à 10%,
- des parfums : 0 à 2%.

f) produits nettoyants pour les vitres et tous usages

Ces produits comprennent de manière usuelle :
- des agents tensioactifs et mouillants : 0,01% à 5%,
- des co-solvants de type alcools ou éthers, par exemple le butyl Cellosolve® ou l'alcool isopropylique,
- des silicones : 0 à 0,2%, en tant qu'agents anti-buée.

g) produits d'aide au repassage

Habituellement, on trouve dans ce type de produits :
- de l'amidon modifié : 0,5% à 10%,

- des silicones : 0,2% à 5%, notamment des émulsions de polydiméthyl-siloxanes,
- des parfums : 0 à 2%,
- des émulsifiants, par exemple des agents tensioactifs de type alcools gras éthoxylés,

h) produits pré-détachants

Ces produits contiennent notamment :

- des solvants : 0 à 20%, notamment des alcools de type éthanol ou isopropanol, ou des glycols (éthylène glycol, xylène glycol, 1,2-propanediol) ou éventuellement des solvants chlorés de type White Spirit,
- des agents tensioactifs : 2% à 20%, par exemple de l'alkylbenzènesulfonate de sodium linéaire,
- des enzymes : 0,1% à 1,5%, par exemple des protéases alcalines et/ou des amylases et/ou des lipolases,
- des agents sequestrants : 0,5% à 40%, par exemple le citrate de sodium, le tripolyphosphate de sodium, le nitrilotriacétate de sodium, l'EDTA ou les phosphonates.

Dans un de ses aspects, l'invention concerne également l'utilisation de ladite composition liquide, notamment dans les applications mentionnées ci-dessus.

Les compositions selon l'invention sont propulsées par un gaz comprimé non liquéfiable à la température ordinaire et à la pression interne de l'aérosol ou du récipient sous pression, peu soluble dans l'eau et les solvants organiques,ininflammable, non toxique, non explosible et non polluant.

En tant que gaz comprimé, on utilisera avantageusement l'air, l'azote, l'oxygène, l'hélium et les gaz rares, ou leurs mélanges.

En revanche, le dioxyde de carbone ($CO_2$) et le protoxyde d'azote ($N_2O$) sont exclus car ils sont trop solubles dans l'eau et polluants.

Des gaz particulièrement préférés sont l'air, l'azote et l'hélium.

A l'intérieur de l'aérosol, la pression est utilement comprise entre 400 et 1200 kPa,(4 et 12 bars) de préférence entre 600 et 1000 kPa (6 et 10 bars). Pendant l'utilisation, cette pression diminue mais doit rester supérieure à 150 kPa (1,5 bar), de préférence supérieure à 200 kPa (2 bars), afin de garantir un vidage complet de l'aérosol.

Dans le cas d'un système de type "AIR-SPRAY®", la pression est déterminée par l'utilisateur.

Les compositions selon l'invention sont totalement compatibles avec la composition du boîtier, qu'il soit constitué de fer blanc nu ou revêtu d'un film de protection, ou d'aluminium verni.

Dans un aspect avantageux, les compositions selon l'invention sont conditionnée dans un récipient coopérant avec un dispositif générateur d'aérosol comprenant une valve à coupelle métallique sertie sur l'ouverture du boitier.

Dans un aspect avantageux, ladite valve est de préférence choisie parmi les valves dites "à tube capillaire". A titre d'exemple, on peut citer notamment la valve Ariane ref. 18260 (Perfect-Valois) et la valve microcapillaire ref. 05903 (Valve Précision).

Dans un autre aspect préféré, on utilisera des valves de type "à bille", notamment, à titre d'exemples, la valve 360° ref. 06233 (Valve Précision) ou les valves à bille ref. 72027 et 72007 (Perfect Valois). Lesdites valves peuvent, dans un aspect avantageux, être elles-mêmes coiffées par exemple sur le téton de valve, par un bouton-poussoir.On utilisera de préférence un bouton-poussoir de type à chambre tourbillonnaire.

A titre d'exemple de tels boutons-poussoirs, on peut notamment citer de manière non limitative les boutons-poussoirs tourbillonnaires à canaux fins ayant les références suivantes :

- WANP GP 3, WAX DU 20 73 et WAX DU 2575 (Perfect - Valois) ;
- COSMOS 210 201-XE, COSMOS 210 390-XE et COSMOS 216901-95 (Valve Précision) ;
- M 4043-2307 et M 4000 Y-2115 (Reboul SMT).

Les exemples cités ci-dessus correspondent à des modes d'utilisation préférés des compositions selon l'invention . Néanmoins, lesdites compositions présentent également des propriétés avantageuses, en particulier en ce qui concerne leur taux de retombées, lorsqu'elles sont utilisées avec d'autres dispositifs et notamment d'autres types de valves et de boutons-poussoirs disponibles commercialement.

Dans un autre aspect préféré, les compositions selon l'invention sont conditionnées dans un récipient , par exemple en matière plastique, muni d'un dispositif de pulvérisation coopérant avec une pompe manuelle à piston permettant la mise ou la remise en pression du récipient par l'utilisateur.

Ce type de conditionnement est notamment commercialisé par la société AIR-SPRAY sous la dénomination AIR-SPRAY®.

L'invention sera mieux comprise à l'aide des exemples non limitatifs ci-après :

EXEMPLE 1 :

Des exemples de compositions utilisables pour la préparation d'une laque capillaire, d'un désodorisant d'atmosphère, d'un déodorant corporel et d'un insecticide, exprimés en pourcentages pondéraux des différents constituants sont donnés ci-après dans le tableau 2.

Ces compositions ont été soumise à un test évaluant la quantité de retombées, ainsi qu'à un test d'inflammabilité.

Les principes de ces tests sont les suivants :

Test de retombées

Le test est basé sur le principe de la mesure pondérale de la quantité de produit pulvérisé retombant sur une surface absorbante (par exemple un papier buvard) de dimensions 150 x 75 cm et placée à 100 cm audessous de l'axe de pulvérisation, rapportée à la quantité totale de produit pulvérisé (cette dernière étant déterminée à partir du débit de la valve et du temps de pulvérisation).

Un système de relais pneumatique permet d'appliquer une pression constante pendant une durée programmable, fixée à 5 secondes sur un système comprenant un boitier en fer blanc de diamètre 52 mm et de hauteur 195 mm rempli à 60% par la composition à pulvériser et porté sous pression initiale d'air purifié à 800 kPa (8 bars), surmonté d'une valve spécifique pour gaz comprimé et d'un bouton poussoir tourbillonnaire.

Les valeurs de retombées sont déterminées par la moyenne obtenue à partir de 5 mesures de pourcentage de produit retombé rapportées à la quantité totale pulvérisée,chaque moyenne étant effectuée à 3 niveaux d'utilisation de l'aérosol :
remplissage maxi (60% du volume nominal de l'aérosol)
remplissage aux 2/3 du maxi
remplissage au 1/3 du maxi,
la pression étant bien entendu variable au long de la durée de vie de l'aérosol.

Les essais réalisés ont montré que les retombées sont acceptables par l'utilisateur lorsqu'elles présentent une valeur inférieure ou égale à 35%, et de préférence à 30%.

Test d'inflammabilité dit "test à la flamme"

Ce test est réalisé selon la proposition de norme FEA F-607X.

Brièvement, la tête de distribution du récipient aérosol étant actionnée en face d'un bec de gaz à une distance de 15 cm, la hauteur de l'orifice de distribution étant au niveau de la ligne horizontale médiane de la flamme, on mesure à l'aide d'une règle graduée placée derrière le récipient et le bec de gaz la longueur de la flamme qui se forme lorsque le jet est projeté sur la flamme du bec de gaz.

Tous les essais ont été réalisés avec des systèmes générateurs d'aérosol comprenant un boîtier en fer blanc de diamètre 52 mm et de hauteur 195 mm équipé d'un bouton-poussoir tourbillonnaire (référence WANP GP 3, Perfect-Valois) monté sur une valve à bille (référence 72027, Perfect-Valois).

TABLEAU 2

| | laque capillaire | désodorisant d'atmosphère | déodorant corporel | insecticide |
|---|---|---|---|---|
| Eau | 55 | 60 | 69 | 79,5 |
| Méthylal | 40 | 20 | - | - |
| Résine Luviskol VA 64® (BASF) | 4 | - | - | - |
| Parfum | 0,7 | 1,0 | 0,9 | - |
| Inhibiteur de corrosion | 0,3 | 0,55 | - | 0,6 |
| Ethanol | - | 18,45 | 10 | - |
| Dioxolanne | - | - | 15 | 5,9 |
| Irgasan®(Ciba-Geigy) | - | - | 0,1 | - |
| Isopropanol | - | - | 5 | - |
| EGDME | - | - | - | 10 |
| Cyperméthrine | - | - | - | 4 |
| Retombées (%) | 5-7-6 | 17-15-25 | 20-25-30 | 30-24-26 |
| Inflammabilité | non | non | non | non |

Toutes ces compositions montrent une totale ininflammabilité et un niveau de retombées susceptible de satisfaire l'utilisateur (≦ 30%).

EXEMPLE 2 :

On a réalisé des compositions contenant différentes proportions (exprimées en pourcentages pondéraux) d'eau, de méthylal et de différents solvants. L'inflammabilité de ces compositions a été mesurée selon le protocole décrit ci-dessus dans l'exemple 1.

Les résultats sont donnés dans le tableau 3 ci-après :

TABLEAU 3

| | 1 | 2 | 3 | 4 | 5 | 6 | 7 | 8 | 9 | 10 | 11 |
|---|---|---|---|---|---|---|---|---|---|---|---|
| Eau | 60 | 40 | 20 | 0 | 60 | 60 | 60 | 55 | 60 | 57 | 64 |
| Ethanol | 40 | 60 | 80 | 100 | 38,45 | 28,45 | 18,45 | 0 | - | - | - |
| n-propanol | - | - | - | - | - | - | - | - | 20 | 15 | 15 |
| n-butanol | - | - | - | - | - | - | - | - | - | 5 | 5 |
| Méthylal | - | - | - | - | - | 10 | 20 | 43,45 | 20 | 20 | 15 |
| Parfum + inhibiteur de corrosion | - | - | - | - | 1,55 | 1,55 | 1,55 | 1,55 | - | 3 | 1 |
| Inflammabilité | limite | oui | oui | oui | limite | non | non | non | non | non | non |

Ces résultats montrent que, de manière surprenante, alors que le méthylal à l'état pur est inflammable, son incorporation dans des compositions hydroalcooliques diminue leur inflammabilité (tests n° 6-11).

EXEMPLE 3 :

Afin d'étudier l'influence de la présence de méthylal dans les compositions selon l'invention sur les retombées, on a préparé différentes compositions contenant du méthylal (tests 1, 3, 5 et 7) ou n'en contenant pas (tests 2, 4, 6 et 8 ).

Les proportions des constituants sont exprimées en pourcentages pondéraux.

On a ensuite effectué un test de retombées selon le protocole décrit plus haut dans l'exemple 1.Toutefois, dans cet exemple, seule la valeur moyenne au remplissage maxi est rapportée.

Les résultats sont rapportés dans le tableau 4 ci-après :

TABLEAU 4

| | 1 | 2 | 3 | 4 | 5 | 6 | 7 | 8 |
|---|---|---|---|---|---|---|---|---|
| Eau | 69 | 79 | 69 | 79 | 69 | 79 | 60 | 60 |
| Méthylal | 10 | - | 10 | - | 10 | - | 10 | - |
| Tétraéthylène glycol diméthyléther | 17,5 | 17,5 | - | - | - | - | - | - |
| Triéthylèneglycol diméthyl éther | - | - | 17,5 | 17,5 | - | - | - | - |
| Méthyl diglycol | - | - | - | - | 17,5 | 17,5 | - | - |
| Ethanol | - | - | - | - | - | - | 28,5 | 38,5 |
| Parfum + bactéricide + conservateur | 3,5 | 3,5 | 3,5 | 3,5 | 3,5 | 3,5 | 1,5 | 1,5 |
| Retombées (%) | 39 | 45 | 24 | 43,5 | 28 | 48 | 19 | 26 |
| Inflammabilité | non | non | non | non | non | non | non | non |

Les résultats, mesurés sur une série de compositions ininflammables, montrent qu'en l'absence de méthylal, le pourcentage de retombées est élevé (>35%) alors que l'ajoût de méthylal en substitution à l'eau diminue significativement les retombées.

## Revendications

1. Composition liquide propulsée en récipient sous pression de gaz comprimé pour une pulvérisation ininflammable et à faibles retombées, caractérisée en ce qu'elle comprend, en pourcentages pondéraux :

a) de 45% à 94,999 % d'eau

b) de 5% à 45% d'au moins un composé de formule (I)

$$R\text{-}A\text{-}(CH_2)_x\text{-}(O)_y\text{-}R' \qquad (I)$$

dans laquelle

- R représente un groupe méthyle , éthyle ou isopropyle,
- R' représente l'hydrogène ou un groupe méthyle, éthyle ou isopropyle,
- ou bien R et R' représentent ensemble un groupement $-CH_2-CH_2-$ dans la formule (I) ci-dessus cyclisée,
- x = 0, 1 ou 2
- y = 0 ou 1
- A est -O-,

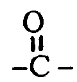 ou 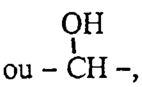,

ledit composé ayant un point d'ébullition compris entre environ 25°C et 200°C à la pression atmosphérique, et

c) de 0,001% à 50% d'une matière active.

**2.** Composition selon la revendication 1, caractérisée en ce qu'elle comprend au moins un composé de formule (I) dans laquelle :

- R, R', x et y sont tels que définis dans la revendication 1 ;
- A est -O-.

**3.** Composition selon la revendication 2, caractérisée en ce que le composé de formule (I) est choisi parmi le groupe constitué par le méthylal, le dioxolanne, l'éthylèneglycol diméthyl éther, l'éther isopropylique et l'éther.

**4.** Composition selon la revendication 1, caractérisée en ce qu'elle comprend au moins un composé de formule (I) dans laquelle :

- R, R', x et y sont tels que définis dans la revendication 1
- A est

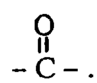.

**5.** Composition selon la revendication 4, caractérisée en ce que le composé de formule (I) est choisi parmi le groupe constitué par l'acétone, la méthyléthylcétone, la diisopropylcétone et la diéthylcétone.

**6.** Composition selon la revendication 1, caractérisée en ce qu'elle comprend au moins un composé de formule (I) dans laquelle :

- R, R' x et y sont tels que définis dans la revendication 1,
- A est

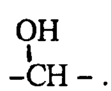.

**7.** Composition selon l'une quelconque des revendications 1 à 6 caractérisée en ce qu'elle comprend également de 0 à 50% en poids d'un alcool aliphatique de formule R" - OH dans laquelle R" est un groupe alkyle linéaire ou ramifié ayant de 1 à 5 atomes de carbone.

**8.** Composition selon la revendication 7 caractérisée en ce que R" est un groupe alkyle linéaire ayant de 2 à 4 atomes de carbone.

**9.** Composition selon l'une quelconque des revendications 1 à 8, caractérisée en ce que la matière active est choisie parmi des parfums, des résines coiffantes, des cires, des agents tensio-actifs ou des agents

insecticides.

**10.** Composition selon l'une quelconque des revendications 1 à 9 caractérisée en ce qu'elle comprend également un co-solvant de type éther lourd de formule

$$R_1(O\text{-}CH_2\text{-}CH_2)_m\text{-}O\text{-}R_2$$

dans laquelle

- $R_1$ et $R_2$, identiques ou différents, représentent un groupe alkyle linéaire ou ramifié ayant de 1 à 6 atomes de carbone ou un groupe phényle ;
- m = 1 à 4.

**11.** Composition selon l'une quelconque des revendications 1 à 8, caractérisée en ce qu'elle comprend également un co-solvant de type acétate de formule

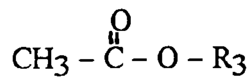

dans laquelle $R_3$ est un groupe alkyle en $C_1$-$C_6$ linéaire ou ramifié, ou un groupe phényle, ou un groupe $-(CH_2)_n$ -O-$R_4$ dans lequel $R_4$ est un groupe méthyl ou éthyl, et n = 1 ou 2.

**12.** Composition selon l'une quelconque des revendications 1 à 11, caractérisée en ce qu'elle comprend, en pourcentages pondéraux :

a) de 50% à 65% d'eau
b) de 15% à 25% d'au moins un composé de formule (I) tel que défini dans la revendication 1, et
c) de 20% à 35% d'une matière active.

**13.** Composition selon l'une quelconque des revendications 1 à 11 , caractérisée en ce qu'elle est propulsée par un gaz comprimé choisi parmi le groupe constitué par l'air, l'azote, l'oxygène, l'hélium et les gaz rares, ou leurs mélanges.

**14.** Composition selon la revendication 13, caractérisée en ce que la pression à l'intérieur de l'aérosol est comprise entre 400 et 1200 kPa, de préférence entre 600 et 1000 kPa.

**15.** Utilisation d'une composition selon l'une quelconque des revendications 1 à 14 en tant qu'agent nettoyant de surface, désodorisant d'atmosphère, déodorant corporel, produit capillaire, agent insecticide, produit cirant, produit dépoussiérant, ou produit prédétachant.

**16.** Dispositif pour le conditionnement d'une composition selon l'une quelconque des revendications 1 à 14, caractérisé en ce qu'il comprend un récipient coopérant avec un dispositif générateur d'aérosol comprenant une valve à coupelle métallique sertie sur l'ouverture du récipient.

**17.** Dispositif selon la revendication 16, caractérisé en ce que la valve à coupelle métallique est une valve à tube capillaire.

**18.** Dispositif selon la revendication 16, caractérisé en ce que la valve à coupelle métallique est une valve à bille.

**19.** Dispositif selon l'une quelconque des revendications 16 à 18, caractérisé en ce que la valve est coiffée, par exemple sur le téton de valve, par un bouton-poussoir.

**20.** Dispositif selon la revendication 19, caractérisé en ce que le bouton-poussoir est de type à chambre tourbillonnaire.

**21.** Dispositif pour le conditionnement d'une composition selon l'une quelconque des revendications 1 à 14, caractérisé en ce qu'il comprend un récipient muni d'un dispositif de pulvérisation coopérant avec une pompe manuelle à piston permettant la mise ou la remise en pression du récipient par l'utilisateur .

Office européen des brevets

# RAPPORT DE RECHERCHE EUROPEENNE

Numero de la demande
EP 93 40 1686

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0 069 906 (BAYER AG)<br>* page 2, ligne 1 - page 3, ligne 19 *<br>* page 5, ligne 24 - page 6, ligne 2 *<br>* exemples 14-17,21,22 *<br>--- | 1,4,5,9 | C09K3/30<br>B65D83/14<br>B05B11/02 |
| D,X | FR-A-2 441 653 (HANS SCHWARZKOPF)<br>* page 4, ligne 23 - page 5, ligne 40 *<br>* revendications *<br>--- | 1,2,7-9,16,17,19,20 | |
| A | DE-A-1 467 746 (ALLIED CHEMICAL)<br>* le document en entier *<br>--- | 1-5,15 | |
| A | FR-A-2 410 036 (HANS SCHWARZKOPF)<br>* page 3, ligne 13 - page 4, ligne 9 *<br>* exemples *<br>--- | 1,4,5,7-9,15 | |
| A | DE-B-1 214 652 (GEIGY AG)<br>* le document en entier *<br>----- | 1-3,9 | |

| DOMAINES TECHNIQUES RECHERCHES (Int. Cl.5 ) |
|---|
| C09K<br>B65D |

Le présent rapport a été établi pour toutes les revendications

| Lieu de la recherche | Date d'achèvement de la recherche | Examinateur |
|---|---|---|
| LA HAYE | 04 OCTOBRE 1993 | PUETZ C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)